(19) Europäisches Patentamt
European Patent Office
Office européen des brevets

(11) **EP 3 261 811 B1**

(12) **EUROPÄISCHE PATENTSCHRIFT**

(45) Veröffentlichungstag und Bekanntmachung des Hinweises auf die Patenterteilung:
**23.09.2020   Patentblatt 2020/39**

(21) Anmeldenummer: **16706559.8**

(22) Anmeldetag: **15.02.2016**

(51) Int Cl.:
**B28B 3/20** *(2006.01)*      **C04B 28/04** *(2006.01)*
**E04D 1/04** *(2006.01)*

(86) Internationale Anmeldenummer:
**PCT/EP2016/053142**

(87) Internationale Veröffentlichungsnummer:
**WO 2016/134996 (01.09.2016 Gazette 2016/35)**

(54) **DACHSTEIN SOWIE VERFAHREN ZUR HERSTELLUNG EINES SOLCHEN DACHSTEINS**

ROOFING TILE AND METHOD FOR PRODUCING SUCH A ROOFING TILE

TUILE ET PROCÉDÉ POUR FABRIQUER CE TYPE DE TUILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2015   DE 102015102530**

(43) Veröffentlichungstag der Anmeldung:
**03.01.2018   Patentblatt 2018/01**

(73) Patentinhaber: **Monier Roofing GmbH**
**61440 Oberursel (DE)**

(72) Erfinder:
- **DRECHSLER, Andreas**
  **64850 Schaafheim (DE)**
- **FRIEDRICH, Michael**
  **63179 Obertshausen (DE)**
- **HEISE, Michael**
  **55546 Neu-Bamberg (DE)**
- **KLEIN, Jürgen**
  **63110 Rodgau (DE)**
- **WESTPHAL, Stephan**
  **61209 Echzell (DE)**
- **CRANFIELD, Ben**
  **Burgess Hill**
  **Sussex RH15 8UZ (GB)**

(74) Vertreter: **Patentanwälte Olbricht Buchhold Keulertz**
**Partnerschaft mbB**
**Bettinastraße 53-55**
**60325 Frankfurt am Main (DE)**

(56) Entgegenhaltungen:
**WO-A1-94/24062      DE-T2- 3 886 525**

EP 3 261 811 B1

## Beschreibung

Die Erfindung betrifft einen Dachstein aus Betonwerkstoff gemäß dem Oberbegriff von Anspruch 1 sowie ein Verfahren zur Herstellung eines solchen Dachsteins aus Betonwerkstoff gemäß Anspruch 12.

Die Herstellung von Dachsteinen aus Betonwerkstoff erfolgt, wie in DE 35 22 846 A1 beschrieben, oft im Strangpressverfahren. Das Strangpressverfahren wird auch als Extrusionsverfahren bezeichnet. Hierbei wird Frischbeton auf ein endloses Band von Unterformen aufgebracht und mittels einer profilierten Walze in die Unterformen gepresst, so dass ein kontinuierliches Band aus verdichtetem Frischbeton entsteht, welches als Extrudat bezeichnet wird und dessen Querschnittsprofil demjenigen des späteren Dachsteins entspricht. Anschließend wird das kontinuierliche Band in einzelne Dachsteine zerschnitten, die durch Trocknung gehärtet werden.

Die mit einem solchen Verfahren unter Verwendung von herkömmlichen Betonwerkstoffen hergestellten Dachsteine besitzen grundsätzlich eine gute Biege- und Schlagfestigkeit sowie eine hohe Frostbeständigkeit und erfüllen somit die in EN490/491 festgelegten Mindestanforderungen. Allerdings weisen solche Dachsteine ein relativ hohes Gewicht von ca. 4,5 kg bis 8,0 kg pro Dachstein auf. Bei der Belastung der Dachunterkonstruktion ist jedoch das Flächengewicht relevant.

Hierbei ist zu berücksichtigen, dass in Abhängigkeit von den Dimensionen des einzelnen Dachsteins eine unterschiedliche Anzahl von Dachsteinen zum Eindecken einer Dachfläche von 1 m$^2$ erforderlich ist. Das Flächengewicht ist daher definiert als das Gesamtgewicht der pro m$^2$ Dachfläche verlegten Dachsteine. Bei Dachsteinen mit branchenüblichen Dimensionen, wie beispielsweise einer Länge = 0,42 m und einer Breite = 0,3 m, werden zum Eindecken einer Dachfläche von 1 m$^2$ ca. 9 - 11 Dachsteine benötigt, wodurch sich ein Flächengewicht von ca. 40 - 50 kg/m$^2$ eingedeckter Dachfläche ergibt.

Neben diesen relativ kleinformatigen Dachsteinen gibt es im Markt jedoch auch Dachsteine mit größeren Formaten, bei denen zum Eindecken von 1 m$^2$ Dachfläche lediglich 7-9 Dachsteine bzw. 5-7 Dachsteine erforderlich sind. Durch die größere Deckfläche des einzelnen Dachsteins lassen sich die Verlegezeiten und die Arbeitskosten reduzieren. Dieser Vorteil wird allerdings durch ein größeres Gewicht des einzelnen Dachsteins vermindert, was dem Dachdecker die Handhabung der großformatigen Dachsteine bei der Verlegung erschwert. Dachsteine mit einem Format von 7-9 Dachsteinen / m$^2$ weisen ein Einzelgewicht von ca. 5,25 kg und ein Flächengewicht von 36 - 47 kg/m$^2$ auf. Bei einem Format von 5-7 Dachsteine / m$^2$ weisen ein Einzelgewicht von 8,0 kg und ein Flächengewicht von 40 - 56 kg/m$^2$ auf. Aufgrund ihres relativ hohen Gewichts sind solche herkömmlichen Betondachsteine nicht für die Sanierung von Dächern geeignet, die bisher mit leichtgewichtigen Bedachungsmaterialien wie z.B. Eternitwellplatten, Schindeln oder Schiefer eingedeckt waren, denn die vorhandene Dachunterkonstruktion ist in der Regel nicht in der Lage, die hohe Last der Betondachsteine zu tragen. Um die vorhandene Dachunterkonstruktion im Sanierungsfall zur Einsparung von Kosten weiter verwenden zu können, muss deshalb das Flächengewicht der Dachsteine reduziert werden.

Die Reduzierung des Gewichts des einzelnen Dachsteins ist zudem wünschenswert, um dem Dachdecker die Handhabung der Dachsteine zu erleichtern, dies gilt insbesondere bei den Dachsteinen mit größeren Formaten von 5-7 bzw. 7-9 Dachsteinen / m$^2$. Die dadurch erreichte Arbeitserleichterung kann einen Beitrag zur Reduzierung der Berufskrankheiten bei Dachdeckern leisten.

Bei der Reduzierung des Gewichts der Dachsteine bzw. des Flächengewichts ist zu berücksichtigen, dass die Geometrie des Dachsteins sowie die Funktionselemente wie beispielsweise Wasserläufe, Seitenfalze, Hängenasen erhalten bleiben müssen. Nur auf diese Weise wird gewährleistet, dass die leichteren Dachsteine mit den herkömmlichen Dachsteinen zu einer Dachanordnung kombinierbar sind und bei Beschädigung eines herkömmlichen Dachsteins dieser gegebenenfalls durch einen leichteren Dachstein ausgetauscht werden kann. Unter Beibehaltung der äußeren Abmessungen sowie der Funktionselemente besteht eine Möglichkeit das Gewicht von Betondachsteinen zu reduzieren darin, die Dichte der Dachsteine zu reduzieren.

In AT E 52 214 B1 ist hierzu eine Betonmischung beschrieben, bei der zur Dichtereduzierung die sonst üblichen Quarzsande durch Leichtgewichtszuschläge ersetzt werden. Die hier verwendeten Leichtgewichtszuschläge weisen allerdings einen hohen Wassergehalt auf, der sich im Wasserzementwert (W/Z Wert), der das Verhältnis von Wasser zum Bindemittel Zement definiert, niederschlägt. Es wird daher ein W/Z Wert von 0,45 bis 1,00 vorgeschlagen.

Dieser Wert ist im Vergleich zu herkömmlichen Betondachsteinen - die einen W/Z Wert von 0,35 bis 0,45 aufweisen - erhöht, was von Nachteil ist, weil das in den Leichtgewichtszuschlägen enthaltene Wasser bei Lagerung der hergestellten Betondachsteine nicht in den Leichtgewichtszuschlägen gehalten werden kann, sondern langsam abgegeben wird. Dadurch kommt es zu Eigenspannungen zwischen dem noch feuchten Kern und der relativ trockenen Oberfläche des Dachsteins, sodass die Festigkeit, die anfangs der von herkömmlichen Dachsteinen entspricht, abnimmt. Dieser Effekt ist zwar nur temporär, solange es Feuchtigkeitsunterschiede zwischen Kern und Oberfläche gibt, kann aber aufgrund großer Mengen des im Kern der Leichtzuschläge gespeicherten Wassers, mehrere Monate anhalten. Die von der EN490/491 geforderten Mindestanforderungen können dann weder nach 28 Tagen noch bei der normalerweise anschließend erfolgenden Eindeckung erreicht werden.

Um das Wasser in den Leichtgewichtszuschlägen zu halten, schlägt DE 38 86 5252 T2 den Einsatz eines Verdickers vor. Zudem wird ein Polymer eingesetzt, welches den aus der Verwendung von Leichtgewichtszuschlägen resultierenden Festigkeitsverlust ausgleichen soll. Diese Bestandteile sind allerdings sehr teuer was zu einer bis zu 5 fachen Erhöhung der Materialkosten gegenüber herkömmlichen Betonmischungen führt. Ein mit einer solchen Betonmischung hergestelltes Produkt ist somit gegenüber den mit herkömmlichen Betonmischungen hergestellten Dachsteinen unwirtschaftlich.

In der WO 94/24062 A1 ist ein weiterer Dachstein gezeigt, dessen Gewicht durch Reduzierung der Dichte des Betons reduziert wird. Durch Verwendung von Leichtgewichtszuschlägen kann eine Dichte zwischen 1,08 g/m$^3$ und 1,38 g/m$^3$ erreicht werden.

Eine weitere Möglichkeit, eine Reduzierung des Gewichts der Dachsteine zu erreichen, besteht darin, die Dicke des Dachsteins zu reduzieren.

Eine solche Gewichtsreduzierung ist allerdings ebenso wie die Verwendung von Leichtgewichtszuschlägen mit einer Reduzierung der Festigkeit der Dachsteine verbunden. Dieser Festigkeitsverlust muss durch eine Erhöhung der Festigkeit des eingesetzten Betonwerkstoffs ausgeglichen werden.

Hierzu schlägt beispielsweise US 5 106 557 B den Einsatz von Faserverstärkungen vor. Typischerweise enthalten solche Dachsteine 4 bis 6 Vol. % Fasern. Bei diesen Fasern kann es sich um Polymer oder Cellulosefasern handeln. Allerdings können solche Faserverstärkungen nur zu einem gewissen Volumenanteil eingesetzt werden. Übersteigt der Volumenanteil 0,5 %, so lässt sich die Betonmasse nicht mehr extrudieren. Ein weiterer Nachteil der Zugabe von Fasern zur Festigkeitsverstärkung liegt darin begründet, dass die Fasern erst dann einen Anteil zur Festigkeitsverstärkung erbringen, wenn die Bindemittelmatrix bereits Risse aufweist. Auf diese Weise können zunächst unsichtbare Schäden entstehen, die später die Dichtigkeit und die Frostbeständigkeit in Frage stellen.

Ohne die Verwendung der Fasern muss die Dichte des Betonwerkstoffs erhöht werden, um den durch die Dickenreduzierung bedingten Festigkeitsverlust auszugleichen. Dies wiederum führt zu einer Erhöhung des Gewichts der Dachsteine. Der Gewichtsreduzierung durch Verringerung der Dicke der Dachsteine sind folglich durch die notwendige Erhöhung der Dichte der Betonmischung Grenzen gesetzt, wenn gleichzeitig die Festigkeitsanforderungen den Mindestanforderungen nach EN490/491 entsprechen sollen.

Diese Grenzen zeigt insbesondere die GB 2 266 904 A auf. Durch Reduzierung der Dicke des Dachsteins kann hier lediglich eine Reduzierung des Flächengewichts der Dachsteine auf einen Bereich zwischen 36 kg/m$^2$ und 42 kg/m$^2$ erreicht werden. Dachsteine mit einem derartigen Flächengewicht sind allerdings immer noch zu schwer, um sie für die Sanierung von Dächern verwenden zu können, die vorher mit leichtgewichtigen Bedachungsmaterialien eingedeckt waren, da für einen solchen Einsatz zumindest eine Gewichtsreduzierung um ca. 45 % auf ein Flächengewicht von ca. 25 kg/m$^2$ erreicht werden muss.

Die Aufgabe der vorliegenden Erfindung besteht darin, diese und weitere Nachteile des Standes der Technik zu überwinden und einen Dachstein aus Betonwerkstoff sowie ein Verfahren für die Herstellung eines solchen Dachsteins bereitzustellen, bei dem der Dachstein bei geringen Materialkosten wirtschaftlich im Extrusionsverfahren herstellbar ist und dabei ein deutlich reduziertes Gewichtaufweist und dennoch dauerhaft mit herkömmlichen Dachsteinen vergleichbare Festigkeiten aufweist. Dabei soll der Dachstein sowohl mit weiteren Dachsteinen als auch mit herkömmlichen Dachsteinen zu einer Dachabdeckungsanordnung kombinierbar sein.

Voranstehende Aufgabe wird gelöst durch einen Dachstein mit den Merkmalen des unabhängigen Anspruchs 1 sowie ein Verfahren mit den Merkmalen des Anspruchs 12. Vorteilhafte Ausführungsformen ergeben sich unter anderem aus Unteransprüchen.

Die Erfindung betrifft einen Dachstein aus einem Betonwerkstoff, wobei der Betonwerkstoff ein Bindemittel, eine Gesteinskörnung, einen Leichtgewichtszuschlag aus beschichtetem und/oder hydrophobiertem Blähton, hydrophobiertem Bims und/oder Glashohlkugeln und/oder Gemischen und Zugabewasser umfasst und der Dachstein mindestens einen Wasserlauf sowie eine aus Deckfalz und Wasserfalz bestehende Seitenverfalzung aufweist, wobei das Verhältnis von Wasser zu Bindemittel kleiner als 0,3 ist, der Leichtgewichtszuschlag aus einem Material besteht, das hydrophob und/oder nicht hygroskopisch ist und der Dachstein nach dem Aushärten eine Dichte im Bereich von 1,6 g/cm$^3$ bis 1,9 g/cm$^3$ aufweist, wobei der Dachstein in den hochbelasteten Bereichen, vorzugsweise im Bereich der Wasserläufe, eine Dicke von 5 mm bis 9 mm, vorzugsweise 7 mm bis 8 mm aufweist, wobei der Dachstein eine Gesamtporosität über 25% und eine offene Porosität von weniger als 10%, ermittelt gemäß der Messverfahren zur Gesamtporosität und offenen Porosität der folgenden Beschreibung, aufweist.

Mit der oben genannten erfindungsgemäßen Merkmalskombination wird das Gewicht des einzelnen Dachsteins und damit auch das Flächengewicht reduziert. Die Reduzierung des Einzelgewichts des Dachsteins erleichtert, insbesondere bei größeren Formaten, die Handhabung, und die gleichzeitig erzielte Reduzierung des Flächengewichts erlaubt die Verwendung im Sanierungsmarkt bei Häusern mit wenig tragfähigen Dachunterkonstruktionen. Die gewünschte Gewichtsreduzierung wird einerseits durch die Verwendung von Leichtgewichtszuschlagsstoffen und andererseits durch eine Reduzierung der Dicke des Dachsteins erzielt.

Leichtgewichtszuschlag ausgewählt aus einer Gruppe umfassend Glashohlkugeln, Blähton, Bims und Gemische daraus eigenen sich besonders um die Dichte des Betonwerkstoffs zu reduzieren. Der Leichtgewichtszuschlag weist beschichteten und/oder hydrophobierten Blähton, hydrophobierten Bims und/oder Glashohlkugeln und/oder Gemische daraus auf. Diese Stoffe nehmen kein oder nur wenig Wasser auf, sodass diese Zuschläge dem Betonwerkstoff kein Wasser entziehen und auch kein Wasser speichern. Auf diese Weise wird die Bildung eines Wasserreservoirs, als eine der Ursachen für den über die Zeit auftretenden Festigkeitsverlust wirksam verhindert.

Da die Reduzierung hauptsächlich in den hochbelasteten Bereichen erfolgt, kann die Geometrie der Seitenverfalzung beibehalten werden, wodurch der erfindungsgemäße Dachstein nicht nur mit weiteren erfindungsgemäßen Dachsteinen sondern auch mit herkömmlichen Dachsteinen zu einer Dachabdeckungsanordnung kombinierbar ist. Überraschenderweise wurde gefunden, dass gerade eine Reduzierung in den hochbelasten Bereichen zudem einen schnelleren Ausgleich von Kern- zu Randfeuchte bewirkt. Die hochbelasteten Bereiche zeigen sich dabei insbesondere wenn eine Kraft auf die Oberseite des Dachsteins einwirkt. Eine solche Kraft wird beispielsweise beim Begehen der Oberfläche durch einen Arbeiter bei der Montage der Dachsteine ausgeübt. Diese Kraft wirkt zunächst als Druckbelastung auf die Oberseite, führt allerdings auf der Dachsteinunterseite zu einer Zugbelastung. Dabei werden insbesondere die Bereiche der Wasserläufe zwischen Deckfalz und Mittelkrempe sowie zwischen Mittelkrempe und Wasserfalz stärker belastet. Wird insbesondere in diesem Bereich der Wasserläufe eine Reduzierung auf eine Dicke von 5 mm bis 9 mm, vorzugsweise 7 mm bis 8 mm vorgenommen, so führt dies zu einem besonders schnellen und einheitlichem Ausgleich von Kern- zu Randfeuchte. Durch diesen Ausgleich wird der durch einen langsamen Austausch von Kern- und Randfeuchte verursachte, über die Zeit auftretende Festigkeitsverlust vermieden.

Zur weiteren Gewichtsreduzierung des Flächengewichts wird die Dickenreduzierung erfindungsgemäß mit einer Reduzierung der Dichte des Dachsteins kombiniert. Hierzu enthält der Betonwerkstoff neben den zur Ausbildung des Betonwerkstoffs notwenigen Bestandteilen wie Bindemittel, Gesteinskörnung (Kies oder Sand) und Zugabewasser, einen Leichtgewichtszuschlag. Dabei ist insbesondere die Auswahl des Materials des Leichtgewichtszuschlags aus einem nicht hygroskopischen Stoff, d.h. einem Material, das kein oder nur sehr wenig Wasser aufnimmt vorteilhaft, da diese Materialien nicht, die ohnehin durch den geringen Wasserzementwert festgelegten geringen Wassermengen absorbieren. Hierdurch wird nicht nur eine Änderung der Konsistenz der Mischung vermieden, sondern gleichsam der durch die Dickenreduzierung erreichte Vorteil des schnellen Ausgleichs von Kern- zu Randfeuchte unterstützt, da kein Wasser in den Leichtgewichtszuschlägen gespeichert wird, welches nachträglich abgegeben werden könnte.

Zur Beschreibung der Porenstruktur kann die offene und die Gesamtporosität herangezogen werden. Die Gesamtporosität beschreibt das Volumen aller Poren im Dachstein. Sie setzt sich aus der Summe der Hohlräume, die untereinander und mit der Umgebung in Verbindung stehen (offene Porosität) und den nicht miteinander verbundenen Hohlräumen (geschlossene Porosität) zusammen. Die offene Porosität ist bei Dachsteinen insofern wichtig, als sie die für Wasser zugänglichen Poren betrifft. Eine hohe offene Porosität ist bei Dachsteine nicht erwünscht, denn kapillar in die Poren eindringendes Wasser führt im Winter zur Frostsprengung und reduziert die Frost-Tau-Wechselbeständigkeit der Dachsteine. Vorteilhaft ist es wenn der Dachstein eine Gesamtporosität über 25 % und eine offene Porosität von weniger als 10% aufweist. Im Vergleich mit herkömmlichen Dachsteinen weisen die erfindungsgemäßen Dachsteine damit eine erhöhte Gesamtporosität und eine reduzierte offene Porosität auf. Die erfindungsgemäßen Dachsteine sind also nicht nur leichter sondern sie besitzen zusätzlich noch eine verbesserte Frost-Tau-Wechselbeständigkeit.

Durch die erfindungsgemäße Kombination der technischen Merkmale war es möglich, einen mit herkömmlichen Dachsteinen zu einer Dachabdeckungsanordnung kombinierbaren Dachstein aus Betonwerkstoff bereitzustellen, der bei geringen Materialkosten wirtschaftlich herstellbar ist und dabei ein deutlich reduziertes Gewicht aufweist und dennoch dauerhaft mit herkömmlichen Dachsteinen vergleichbare Festigkeiten aufweist.

In einer bevorzugten Ausführungsform weist der Dachstein 1.300 cm$^3$ bis 1.700 cm$^3$ Betonwerkstoff auf, wobei der Dachstein insbesondere ein Format aufweist, mit dem 9 bis 11 Dachsteine/m$^2$ verlegt werden können. In einer alternativen Ausführungsform weist der Dachstein 1.700 cm$^3$ bis 2.250 cm$^3$ Betonwerkstoff auf, wobei der Dachstein insbesondere ein Format aufweist, mit dem 7 bis 9 Dachsteine/m$^2$ verlegt werden können. In einer weiteren alternativen Ausführungsform weist der Dachstein 2.250 cm$^3$ bis 2.750 cm$^3$ Betonwerkstoff auf, wobei der Dachstein insbesondere ein Format aufweist, mit dem 5 bis 7 Dachsteine/m$^2$ verlegt werden können.

Die alternativen, bevorzugten Ausführungsformen definieren die Menge an eingesetzten Betonwerkstoff pro Dachstein in Abhängigkeit des jeweiligen Formats. Hierdurch wird das Flächengewicht pro m$^2$ deutlich reduziert und dennoch die Festigkeit im Vergleich zu herkömmlichen Dachsteinen beibehalten.

Des Weiteren hat es sich als vorteilhaft erwiesen, dass der Leichtgewichtszuschlag vor dem Mischen weniger als 5 Gew. % Wasser aufweist. Hierbei liegt der Vorteil darin, dass die Leichtgewichtszuschläge bereits bei Anlieferung trocken sind und somit durch den Leichtgewichtszuschlag kein zusätzliches Wasser in die Mischung eingebracht wird. Es kommt somit zu keiner Erhöhung des Wasserzementwerts, sodass ein Festigkeitsverlust bei Lagerung der Betondachsteine verhindert wird.

In einer speziellen Ausführungsform umfasst das Bindemittel Zement und Microsilica. Eine solche Zusammensetzung verbessert die Zementmatrix, wobei die Microsilica zumindest teilweise den Festigkeitsverlust durch die eingesetzten Leichtgewichtszuschläge kompensiert. Gleichzeitig trägt die Verwendung von Microsilica zur Reduzierung der offenen Porosität und damit zur Verbesserung der Frost-Tau-Wechselbständigkeit bei.

In einer vorteilhaften Ausgestaltung, ist das Bindemittel eine Mischung, wobei die Bestandteile der Mischung ausgewählt sind aus der Gruppe umfassend Portlandzement, Microsilica und Hochleistungsfließmittel. Durch den Einsatz des Hochleistungsfließmittels kann, trotz des geringen Wasserzementwerts, ein Betonwerkstoff erreicht werden, der eine Konsistenz aufweist, die sich leicht extrudieren lässt.

Besonders vorteilhaft ist es, wenn das Verhältnis von Wasser zu Bindemittel 0,25 und/oder die Mischungsfeuchte des Betonwerkstoffs kleiner oder gleich 11% ist. Bei diesen Werten verbleibt nur eine geringe Wassermenge oder gar kein Wasser im Dachstein, sodass nur wenig Wasser durch Leichtzuschlagstoffe aufgenommen werden kann und es bei Lagerung des Dachsteins nicht zu einem starken Feuchtigkeitsverlust kommen kann. Eine Rissbildung und ein Festigkeitsrückgang bei Lagerung werden somit erfolgreich vermieden.

In einer speziellen Ausführungsform weist der Dachstein nach dem Aushärten eine Dichte von 1,8 g/cm$^3$ auf. Dieser Wert hat sich als besonders vorteilhaft erwiesen, da bei einer solchen Dichte eine Reduzierung der Dicke des Dachsteins auf 7 mm bis 8 mm möglich ist und dennoch dauerhaft die Festigkeitsanforderungen der Norm EN 490/491 erfüllt werden.

Vorzugsweise weist der Dachstein ein Flächengewicht von weniger oder gleich 35 kg/m$^2$ auf. Ein Dachstein mit einem solchen Flächengewicht lässt sich beispielsweise für die Sanierung von Dächern verwenden, für die keine herkömmlichen, schweren Dachsteine eingesetzt werden können. Auch vereinfacht die Reduzierung des Flächengewichts und somit auch des Gewichts des einzelnen Dachsteins ein Verlegen der Dachsteine durch den Dachdecker.

Gemäß einer weiteren Ausgestaltung der vorliegenden Erfindung weist der Dachstein beim Eindecken einer Dachfläche von 1 m$^2$ ein Flächengewicht von weniger oder gleich 25 kg/m$^2$ auf. Ein solcher Dachstein lässt sich vielfältig aber insbesondere für die Sanierung von bisher mit leichteren Bedachungsmaterialien eingedeckten Gebäuden einsetzen.

In einer bevorzugten Ausführungsform wiegt der Dachstein weniger oder gleich 3,2 kg pro Stein, wobei der Dachstein insbesondere ein Format aufweist, mit dem 9 bis 11 Dachsteine/m$^2$ verlegt werden können. In einer alternativen Ausgestaltung wiegt der Dachstein weniger oder gleich 3,85 kg pro Stein, wobei der Dachstein insbesondere ein Format aufweist, mit dem 7 bis 9 Dachsteine/m$^2$ verlegt werden können. Gemäß einer weiteren alternativen Ausführungsform wiegt der Dachstein weniger oder gleich 5,85 kg pro Stein, wobei der Dachstein insbesondere ein Format aufweist, mit dem 5 bis 7 Dachsteine/m$^2$ verlegt werden können.

Bei den genannten, alternativen Gewichten der Dachsteine in Abhängigkeit des Formates kann gewährleistet werden, dass das Flächengewicht gegenüber herkömmlichen Dachsteinen deutlich reduziert ist. Somit können diese Dachsteine flexibler eingesetzt werden und für den Dachdecker bequemer verlegt werden.

Des Weiteren betrifft die Erfindung ein Verfahren für die Herstellung eines solchen Dachsteins beim dem zunächst der Betonwerkstoff umfassend Bindemittel, eine Gesteinskörnung, einen Leichtgewichtszuschlag aus einer Gruppe umfassend Glashohlkugeln, Blähton, Bims oder Gemische daraus und Zugabewasser gemischt wird und die Mischung anschließend durch Extrusion geformt wird. Aus dem erhaltenen geformten Extrudat werden dann durch Teilung Dachsteine ausgebildet, die gehärtet werden. Dabei ist vorgesehen, dass das Verhältnis von Wasser zu Bindemittel kleiner als 0,3 ist, der Leichtgewichtszuschlag aus einem Material besteht, das hydrophob und/oder nicht hygroskopisch ist und der Dachstein nach dem Aushärten eine Dichte im Bereich von 1,6 g/cm$^3$ bis 1,9 g/cm$^3$ und in den hochbelasteten Bereichen, vorzugsweise im Bereich der Wasserläufe, eine Dicke von 5 mm bis 9 mm, vorzugsweise 7 mm bis 8 mm aufweist und der Dachstein eine Gesamtporosität über 25% und eine offene Porosität von weniger als 10% aufweist.

Ein solches Verfahren hat insbesondere wirtschaftliche Vorteile, da die bisher zur Verwendung von herkömmlichen Dachsteinen eingesetzten Maschinen weiter verwendet werden können und keine neuen Maschinen angeschafft werden müssen. Zudem hat sich das Extrusionsverfahren bereits als zuverlässiges Herstellungsverfahren für herkömmliche Betondachsteine etabliert, sodass ein gleichmäßiges und kostengünstiges Ergebnis erreicht werden kann. Gemäß einer bevorzugten Ausgestaltung des Verfahrens weist der Dachstein 1.300 cm$^3$ bis 1.700 cm$^3$ Betonwerkstoff auf, wobei der Dachstein insbesondere ein Format aufweist, mit dem 9 bis 11 Dachsteine/m$^2$ verlegt werden können. In einer alternativen Ausführungsform weist der Dachstein 1.700 cm$^3$ bis 2.250 cm$^3$ Betonwerkstoff auf, wobei der Dachstein insbesondere ein Format aufweist, mit dem 7 bis 9 Dachsteine/m$^2$ verlegt werden können. In einer weiteren alternativen Ausgestaltung ist bevorzugt, dass der Dachstein 2.250 cm$^3$ bis 2.750 cm$^3$ Betonwerkstoff aufweist, wobei der Dachstein insbesondere ein Format aufweist, mit dem 5 bis 7 Dachsteine/m$^2$ verlegt werden können.

Die alternativen Ausgestaltungen des Verfahrens ermöglichen die Herstellung von Dachsteinen mit einem reduzierten Flächengewicht und einer Festigkeit, die mit herkömmlichen Dachsteinen vergleichbar ist.

Weitere Merkmale, Einzelheiten und Vorteile der Erfindung ergeben sich aus dem Wortlaut der Ansprüche sowie aus der folgenden Beschreibung von Ausführungsbeispielen und den beispielhaft in den Zeichnungen dargestellten Ausführungsformen.

Die erfindungsgemäßen Dachsteine werden im Strangpress- bzw. Extrusionsverfahren hergestellt. Hierzu werden die Bestandteile des Betonwerkstoffs, nämlich Bindemittel, Gesteinskörnung, hydrophober und/oder nicht hygroskopischer Leichtgewichtszuschlag und Zugabewasser zunächst gemischt. Dabei beträgt das Verhältnis von Wasser zu Bindemittel weniger als 0,3. Anschließend wird die Mischung in eine Extrusionsmaschine für Dachsteine gegeben, die aus der Betonwerkstoffmischung mittels Extrusion, ein ununterbrochenes dem Querschnitt des Dachsteins entsprechend profiliertes Band formt. Dieses auf einem endlosen Strang von Unterformen liegende Extrudat wird anschließend in einzelne Dachsteine zerschnitten. Die Konfiguration der Extrusionsmaschine und die Größe der Unterformen ist dabei von dem Format des herzustellenden Dachsteins abhängig. Sie wird derart vorgenommen, dass die extrudierten Dachsteine beispielsweise 1.300 cm³ bis 1.700 cm³ Betonwerkstoff pro Dachstein bei einem Format von 9 bis 11 Dachsteine/m² sowie in den hochbelasteten Bereichen, vorzugsweise im Bereich der Wasserläufe, eine Dicke von 5 mm bis 9 mm, vorzugsweise 7 mm bis 8 mm aufweisen. Anschließend erfolgt die Aushärtung der Dachsteine, nach der die einzelnen Dachsteine eine Dichte im Bereich von 1,6 g/cm³ bis 1,9 g/cm³ aufweisen. Es versteht sich, dass bei der Herstellung von Dachsteinen mit größeren Formaten (7-9 Dachsteine/m², 5-7 Dachsteine/m²) bzw. Volumen an Betonwerkstoff (1.700-2.250 cm³, 2.250-2.750 cm³) auch größere Unterformen und andere Extrudereinstellung verwendet werden. Die mit einem solchen Verfahren hergestellten Dachsteine weisen alle dauerhaft mit herkömmlichen Dachsteinen vergleichbare Festigkeiten auf.

Dachsteine, die gemäß obiger Beschreibung hergestellt werden, unterscheiden sich in ihrer Porenstruktur deutlich von herkömmlichen Dachsteinen. Zur Beschreibung der Porenstruktur kann die offene und die Gesamtporosität herangezogen werden. Die Gesamtporosität beschreibt das Volumen aller Poren im Dachstein und die offene Porosität die Poren, die für Wasser zugänglich sind. Während die Gesamtporosität eine methodenunabhängige Stoffeigenschaft ist, hängt der Messwert für die offene Porosität von den Bedingungen ab, unter denen die Wasserabsorption gemessen wird.

Als Messmethode zur Messung der Gesamtporosität wird eine Methode angewendet, bei der die Gesamtporosität basierend auf Rein- und Rohdichte bestimmt wird. Hierzu werden aus dem zu untersuchenden Dachstein zunächst einige Probenstücke herausgeschlagen. Hierbei kann es sich insbesondere um Bereiche am Wasserfalz, im Bereich zwischen dem Wasserfalz und Mittelkrempe, im Bereich der Mittelkrempe oder des Deckfalzes handeln. Die herausgeschlagenen Probenstücke werden im Wärmeschrank bei 105 °C mindestens zwei Stunden getrocknet und anschließend auf Raumtemperatur abgekühlt. An diesen Schritt schließt sich ein Hydrophobierungsschritt an, bei dem die Proben in die Hydrophobierlösung getaucht werden bis keine Luftblasen mehr entstehen. Nach erneutem Trocknen bei 105 °C und anschließenden Abkühlen auf Raumtemperatur, wird das Gewicht der einzelnen Probenstücke durch Wägung (W1) bestimmt. Anschließend wird das Gewicht des Probenstücks in einem Zustand bestimmt, bei dem das Probenstück vollständig in endmineralisiertes Wasser eingetaucht ist (W2). Gleichzeitig findet eine Messung der Wassertemperatur statt und die Dichte des Wassers bei der gemessenen Temperatur anhand einer Dichtetabelle wird ermittelt.

Außerdem wird die Reindichte der Probenstücke mittels Pyknometrie bestimmt.

Die Gesamtporosität lässt sich mit den ermittelten Parametern wie folgt berechnen:

$$\text{Gesamtporosität [Vol.-\%]} = \frac{\text{Reindichte } \rho \text{ [g/cm³]} - \text{Rohdichte } \rho_{bulk} \text{ [g/cm³]}}{\text{Reindichte } \rho \text{ [g/cm³]}} * 100\,\%$$

wobei

$$\rho_{bulk} = \text{Rohdichte des Dachsteines [g/cm³]} = (W1 / (W1 - W2) * \rho_w$$

W1     Gewicht des Probenstücks bei Wägung nach dem ersten Abkühlen auf Raumtemperatur [g]
W2     Gewicht des Probenstücks bei Wägung unter Wasser [g]
$\rho_w$     Dichte des Wassers bei entsprechender Temperatur [g/cm³]

Die Mithilfe des oben genannten Verfahrens bestimmte Gesamtdichte kann zur Berechnung der offenen Porosität herangezogen werden.

Die Probenstücke werden hierzu zunächst für mindestens 3 Stunden bei 105 °C getrocknet und anschließend auf Raumtemperatur abgekühlt. Hieran anschließend wird das Gewicht der trockenen Probenstücke bestimmt ($M_{dry}$). Die Probenstücke werden danach für eine Woche unter Wasser gelagert, wobei alle Probenstücke vollständig unter Wasser getaucht sind. Nach einer Woche werden die Probenstücke aus dem Wasser genommen, oberflächlich abgetrocknet und deren Gewicht bestimmt ($M_{wet}$). Zudem wird das Gewicht in einem Zustand bestimmt, bei dem das Probenstück vollständig in deionisiertem Wasser untergetaucht ist ($M_{under}$). Gleichzeitig findet eine Messung der Wassertemperatur statt und die Dichte des Wassers bei der gemessenen Temperatur anhand einer Dichtetabelle wird ermittelt.

Die offene Porosität lässt sich dann anhand der folgenden Formel bestimmen:

$$\text{Wasseraufnahme [M.-\%]} = \frac{(M_{wet} - M_{dry})}{M_{dry}} \times 100\%$$

$$\text{Offene Porosität [Vol.-\%]} = \text{Wasseraufnahme} \times \text{Schüttdichte}$$

$$= \frac{(M_{wet} - M_{dry})}{M_{dry}} \times 100\% \times \frac{M_{dry} \times \text{Wasserdichte}}{M_{under}}$$

$$\text{Schüttdichte [g/cm}^3\text{]} = \frac{M_{dry} \times \text{Wasserdichte}}{M_{under}}$$

$$\text{Gesamtdichte [Vol.-\%]} = \frac{(\text{absolute Dichte} - \text{Schüttdichte})}{\text{Schüttdichte}} \times 100\%$$

M in [g]

Wasserdichte [g/cm$^3$]

Unter Anwendung oben beschriebener Methoden erhält man für herkömmliche und erfindungsgemäße Dachsteine folgende Werte:

|  | Gesamtporosität | Offene Porosität |
|---|---|---|
| herkömmliche Dachsteine | 17-20% | 11 - 13% |
| erfindungsgemäße Dachsteine | >25 | <10% |

Der Betonwerkstoff kann dabei beispielsweise folgende Zusammensetzung aufweisen:

**Beispiel 1**

| Bestandteil | Menge in kg |
|---|---|
| Blähton 1-2 mm | 90 |
| Quarzsand 0-2 mm | 517 |
| Zement CEM I 52,5 R | 209 |
| Mikrosilica | 30 |
| Fließmittel | 3 |
| Eisenoxidpigment | 5 |
| Wasser | 55 |

Der Betonwerkstoff wies eine Mischungsfeuchte von 6,30 % auf.

Unter Verwendung dieses Betonwerkstoffs wurden Dachsteine extrudiert, die ein mittleres Gewicht von 2685 g und damit ein Flächengewicht von 24,2 kg/m$^2$ (bei 9 Dachsteinen /m$^2$) aufwiesen.

Die Dachsteine erreichen mit herkömmlichen Dachsteinen vergleichbare Festigkeiten und erfüllen die Anforderungen der EN 490/491.

In einem anderen Ausführungsbeispiel kann der Betonwerkstoff beispielsweise folgende Zusammensetzung aufweisen:

**Beispiel 2**

| Bestandteil | Menge in kg |
|---|---|
| Blähton 1-2 mm | 75 |
| Quarzsand 0-2 mm | 517 |
| Zement CEM I 52,5 R | 195 |
| Mikrosilica | 22 |
| Fließmittel | 5 |
| Eisenoxidpigment | 7 |
| Wasser | 58 |

Der Betonwerkstoff wies eine Mischungsfeuchte von 6,80 % auf.

Unter Verwendung von ca. 1300 cm$^3$ dieses Betonwerkstoffs pro Dachstein wurden Dachsteine extrudiert, die ein mittleres Gewicht von 2450 g und damit ein Flächengewicht von 24,5 kg/m$^2$ (bei 10 Dachsteinen/m$^2$) sowie eine Dichte von 1,9 g/cm$^3$ aufwiesen. Die Gesamtporosität betrug 27% und die offene Porosität 6,5%

Die Dachsteine wiesen eine mit herkömmlichen Dachsteinen vergleichbare Festigkeit auf und erfüllen die Anforderungen der EN 490/491.

In einem anderen Ausführungsbeispiel kann der Betonwerkstoff beispielsweise folgende Zusammensetzung aufweisen:

**Beispiel 3 (nicht erfindungsgemäß)**

| Bestandteil | Menge in kg |
|---|---|
| Blähton 1-2mm | 164 |
| Quarzsand 0-2 mm | 375 |
| Zement CEM I 52,5 R | 182 |
| Mikrosilica | 20 |
| Fließmittel | 2 |
| Eisenoxidpigment | 4 |
| Wasser | 69 |

Der Betonwerkstoff wies eine Mischungsfeuchte von 8,30 % auf.

Unter Verwendung von ca. 1670 cm$^3$ dieses Betonwerkstoffs pro Dachstein wurden Dachsteine extrudiert, die im Bereich der Wasserläufe eine Dicke von ca. 9 mm sowie ein mittleres Gewicht von 2770 g und damit ein Flächengewicht von 24,9 kg/m$^2$ aufwiesen (bei 9 Dachsteinen/m$^2$). Die Dachsteine wiesen eine Dichte von 1,66 g/cm$^3$ und mit herkömmlichen Dachsteinen vergleichbare Festigkeit auf und erfüllen die Anforderungen der EN 490/491. Die offene Porosität betrug 32% und die offene Porosität betrug 8,3%

In einem anderen Ausführungsbeispiel kann der Betonwerkstoff beispielsweise folgende Zusammensetzung aufweisen:

**Beispiel 4**

| Bestandteil | Menge in kg |
|---|---|
| hydrophobierter Bims | 158 |
| Quarzsand 0-0,6 mm | 361 |
| Microsilicazement | 364 |
| Fließmittel | 4 |
| Eisenoxidpigment | 4 |
| Wasser | 98 |

Der Betonwerkstoff wies eine Mischungsfeuchte von 10,00 % auf.

Mit diesem Betonwerkstoff wurden ebene Platten für materialtechnische Untersuchungen extrudiert. Die Platten erreichen bei einer Dichte von 1,5 g/cm$^3$ nach einem Tag eine Festigkeit von 3,9 MPa und nach 28 Tagen eine Biegezugfestigkeit von 7 MPa.

Mit diesem Betonwerkstoff können aber auch Dachsteine mit Formaten, mit denen 9-11, 7-9 und/oder 5-7 Dachsteine/m$^2$ verlegt werden können, extrudiert werden.

In einem anderen Ausführungsbeispiel kann der Betonwerkstoff beispielsweise folgende Zusammensetzung aufweisen:

**Beispiel 5**

| Bestandteil | Menge in kg |
|---|---|
| Blähton | 112 |
| Quarzsand 0- 0,6 mm | 342 |
| Glashohlkugeln | 65 |
| Microsilicazement | 342 |
| Fließmittel | 2 |
| Eisenoxidpigment | 4 |
| Wasser | 73 |

Der Betonwerkstoff wies eine Mischungsfeuchte von 7,5 % auf.

Mit diesem Betonwerkstoff wurden ebene Platten für materialtechnische Untersuchungen extrudiert. Die Platten erreichen bei einer Dichte von 1,6 g/cm$^3$ nach einem Tag eine Festigkeit von 4,6 MPa und nach 28 Tagen eine Biegezugfestigkeit von 7,8 MPa.

Mit diesem Betonwerkstoff können aber auch Dachsteine mit Formaten, mit denen 9-11, 7-9 und/oder 5-7 Dachsteine/m$^2$ verlegt werden können, extrudiert werden.

In einem anderen Ausführungsbeispiel kann der Betonwerkstoff beispielsweise folgende Zusammensetzung aufweisen:

**Beispiel 6:**

Ausgangspunkt ist das Dachsteinmodell "Doppel-S" der Firma Braas, das unter anderem in Deutschland und Dänemark verkauft wird.

Dieses Dachsteinmodell entspricht einem Format mit dem 9-11 Dachsteine/m$^2$ verlegt werden können. Dabei weist der Dachstein eine Länge von 0,42 m und eine Breite von 0,3 m auf.

Ein herkömmlicher Dachstein dieses Formats (Doppel S) wiegt normalerweise 4400 g und weist ein Volumen von 2000 cm$^3$ auf.

Durch eine erfindungsgemäße Reduzierung der Dicke beispielsweise im Bereich der Wasserläufe sinkt das Steinvolumen auf 1455 cm$^3$. Durch diese Maßnahme verringert sich das Gewicht des Steins bei Verwendung des normalen Betons auf 3200 g. Wird jetzt nachstehende Rezeptur zur Extrusion eingesetzt, wird eine weitere Gewichtsreduktion erreicht:

| Bestandteil | Menge in kg |
|---|---|
| Blähton 1-2 mm | 90 |
| Quarzsand 0-2 mm | 517 |
| Zement CEM I 52,5 R | 209 |
| Mikrosilica | 30 |
| Fließmittel | 3 |
| Eisenoxidpigment | 5 |
| Wasser | 55 |

Der Betonwerkstoff wies eine Mischungsfeuchte von 6,30 % auf.
Unter Verwendung dieses Betonwerkstoffs wurden Dachsteine extrudiert, die ein mittleres Gewicht von 2691 g und damit ein Flächengewicht von 25 kg/m$^2$ (bei durchschnittlich 9,3 Dachsteinen /m$^2$) aufwiesen.
Die Dachsteine erreichen mit herkömmlichen Dachsteinen vergleichbare Festigkeiten und erfüllen die Anforderungen der EN 490/491.
In einem anderen Ausführungsbeispiel kann der Betonwerkstoff beispielsweise folgende Zusammensetzung aufweisen:

**Beispiel 7:**

Ausgangspunkt ist das Dachsteinmodell "Harzer Pfanne 7" der Firma Braas, das unter anderem in Deutschland und Österreich verkauft wird. Dieses Dachsteinmodell entspricht einem Format mit dem 7-9 Dachsteine/m$^2$ verlegt werden können.
Ein herkömmlicher Dachstein dieses Formats wiegt normalerweise 5250 g und weist ein Steinvolumen von 2386 cm$^3$ auf. Durch eine erfindungsgemäße Reduktion der Dicke sinkt das Steinvolumen auf 1736 cm$^3$. Durch diese Maßnahme verringert sich das Gewicht des Steins bei Verwendung des normalen Betons auf 3818 g. Wird jetzt nachstehende Rezeptur zur Extrusion eingesetzt, wird eine weitere Gewichtsreduktion erreicht:

| Bestandteil | Menge in kg |
|---|---|
| Blähton 1-2 mm | 75 |
| Quarzsand 0-2 mm | 517 |
| Zement CEM I 52,5 R | 195 |
| Mikrosilica | 22 |
| Fließmittel | 5 |
| Eisenoxidpigment | 7 |
| Wasser | 58 |

Der Betonwerkstoff wies eine Mischungsfeuchte von 6,80 % auf.
Unter Verwendung von ca. 1736 cm$^3$ dieses Betonwerkstoffs pro Dachstein wurden Dachsteine extrudiert, die ein mittleres Gewicht von 3211 g und damit ein Flächengewicht von 25 kg/m$^2$ (bei durchschnittlich 7,8 Dachsteinen/m$^2$) sowie eine Dichte von 1,85 g/cm$^3$ aufwiesen. Die Gesamtporosität betrug 27% und die offene Porosität 6,5%
Die Dachsteine wiesen eine mit herkömmlichen Dachsteinen vergleichbare Festigkeit auf und erfüllen die Anforderungen der EN 490/491.
In einem anderen Ausführungsbeispiel kann der Betonwerkstoff beispielsweise folgende Zusammensetzung aufweisen:

**Beispiel 8: (nicht erfindungsgemäß)**

Ausgangspunkt ist das Dachsteinmodell "Coppo Big", das in Italien verkauft wird.

Dieses Dachsteinmodell entspricht einem Format mit dem 5-7 Dachsteine/m$^2$ verlegt werden können.

Ein herkömmlicher Dachstein dieses Formats wiegt normalerweise 8000 g und weist ein Steinvolumen von 3636 cm$^3$ auf. Durch eine erfindungsgemäße Reduktion der Dicke sinkt das Steinvolumen auf 2645 cm$^3$. Durch diese Maßnahme verringert sich das Gewicht des Stein bei Verwendung des normalen Betons auf 5818 g.

Wird jetzt nachstehende Rezeptur zur Extrusion eingesetzt, wird eine weitere Gewichtsreduktion erreicht:

| Bestandteil | Menge in kg |
|---|---|
| Blähton 1-2mm | 164 |
| Quarzsand 0-2 mm | 375 |
| Zement CEM I 52,5 R | 182 |
| Mikrosilica | 20 |
| Fließmittel | 2 |
| Eisenoxidpigment | 4 |
| Wasser | 69 |

Der Betonwerkstoff wies eine Mischungsfeuchte von 8,30 % auf.

Unter Verwendung von ca. 2645 cm$^3$ dieses Betonwerkstoffs pro Dachstein wurden Dachsteine extrudiert, die im Bereich der Wasserläufe eine Dicke von ca. 9 mm sowie ein mittleres Gewicht von 4893 g und damit ein Flächengewicht von 24,4 kg/m$^2$ aufwiesen (bei 5 Dachsteinen/m$^2$). Die Dachsteine wiesen eine Dichte von 1,85 g/cm$^3$ und mit herkömmlichen Dachsteinen vergleichbare Festigkeit auf und erfüllen die Anforderungen der EN 490/491. Die offene Porosität betrug 32% und die offene Porosität betrug 8,3%

Die in den Beispielen 1 bis 8 aufgeführten Betonrezepturen sind für die Herstellung aller beschriebenen Dachsteinformate (9-11, 7-9 und 5-7 Dachsteine/m$^2$) einsetzbar und nicht auf die in den Beispielen genannten Formate beschränkt.

Aus den Beispielen ergibt sich eine Dichte/Dicke Matrix mit Werten für die Herstellung von Dachsteinen, die ein reduziertes Flächengewicht und dabei dauerhaft mit herkömmlichen Dachsteinen vergleichbare Festigkeiten aufweisen

Eine solche Dichte/Dicke Matrix ist nachfolgend dargestellt:

| Dichte (g/cm$^3$) | Dicke (mm) | Festigkeitsanforderung (MPa) | Hinweis zur Anwendbarkeit |
|---|---|---|---|
| 2,2 | 3 | 15,0 | Sehr hohe Anforderung an die Festigkeit |
| 2,1 | 4 | 13,0 | Sehr hohe Anforderung an die Festigkeit |
| 2 | 5 | 11,0 | Sehr hohe Anforderung an die Festigkeit |
| 1,9 | 6 | 9,0 | Bevorzugter Arbeitsbereich |
| 1,8 | 7 | 8,0 | Bevorzugter Arbeitsbereich |
| 1,7 | 8 | 7,0 | Bevorzugter Arbeitsbereich |
| 1,6 | 9 | 6,5 | Bevorzugter Arbeitsbereich |
| 1,5 | 10 | 6,0 | Sehr hoher Anteil an Leichtgewichtszuschlägen notwendig daher starke Festigkeitsreduktion |
| 1,4 | 11 | 5,5 | Sehr hoher Anteil an Leichtgewichtszuschlägen notwendig daher starke Festigkeitsreduktion |
| 1,3 | 12 | 5,0 | Sehr hoher Anteil an Leichtgewichtszuschlägen notwendig daher starke Feshgkeitsreduktion |

Der Matrix ist zu entnehmen, dass falls eine Gewichtsreduzierung des Flächengewichts, auf beispielweise ca. 25 kg/m$^2$, hauptsächlich durch die Reduzierung der Dicke des Dachsteins erreicht werden soll, eine Reduzierung der Produktdicke von einem für herkömmliche Dachsteine typischen Wert von 10 mm bis 12 mm auf 3 mm bis 4 mm notwendig wäre. Eine solche Reduzierung führt allerdings zu einem zu starken Anstieg der Anforderungen an die Festigkeit des Materials. Die Festigkeit des Betonwerkstoffs müsste von 5 MPa auf 15 MPa erhöht werden. Dies ist nicht praktikabel.

Ähnliches gilt für den Fall, dass eine Gewichtsreduzierung des Flächengewichts hauptsächlich durch die Reduzierung der Dichte des Dachsteins erreicht werden soll. Bei einer, im Vergleich zu herkömmlichen Dachsteinen unveränderten Produktdicke von 10 mm bis 12 mm, wäre eine Reduzierung der Dichte auf einen Wert von 1,3 g/cm$^3$ bis 1,5 g/cm$^3$ erforderlich. Hierfür muss allerdings ein sehr hoher Anteil an Leichtgewichtszuschlägen verwendet werden, der zu einer zu starken Reduktion der Festigkeit führt. Auch dies ist nicht praktikabel.

Überraschenderweise hat sich gerade eine Reduzierung der Produktdicke im Bereich der Wasserläufe auf 5 mm bis 9 mm vorzugsweise 7 mm bis 8 mm in Kombination mit einer Dichte des Dachsteins von 1,6 g/cm$^3$ bis 1,9 g/cm$^3$ als besonders vorteilhaft erwiesen. In diesem bevorzugten Arbeitsbereich können Dachsteine hergestellt werden, die die Festigkeitsanforderungen erfüllen.

Um eine ausreichende Festigkeit auch über einen Lagerzeitraum zu garantieren, wird erfindungsgemäß ein Betonwerkstoff verwendet, der durch das geringe Wasser zu Bindemittelverhältnis (Wasserzementwert) nur über eine geringe Restfeuchte verfügt. Hierbei hat sich insbesondere ein Wasserzementwert von 0,25 als vorteilhaft erwiesen. Zudem werden die Leichtgewichtszuschläge derart ausgewählt, dass sie diese ohnehin sehr geringen Wassermengen nicht absorbieren.

In der folgenden Tabelle sind die Flächengewichte von herkömmlichen Dachsteinen und die bevorzugten Flächengewichte der erfindungsgemäßen Dachsteine in Abhängigkeit der jeweiligen bevorzugten Dachsteinformate aufgeführt.

| Dachsteinformat | | herkömmliche Dachsteine | | erfindungsgemäße Dachsteine | |
|---|---|---|---|---|---|
| Anzahl Dachsteine / m² | | Flächengewicht (g/m²) | | Flächengewicht (g/m²) | |
| | | von | bis | von | bis |
| 9 | 11 | 39600 | 48400 | 24218 | 29600 |
| 7 | 9 | 36750 | 47250 | 22475 | 28897 |
| 5 | 7 | 40000 | 56000 | 24463 | 34248 |

Eine Ausführungsform eines erfindungsgemäßen Dachsteins, welcher mit einem Betonwerkstoff gemäß einem der Beispiele hergestellt wurde, ist beispielhaft in den Figuren dargestellt.

Es zeigen:

Fig. 1 Querschnitt entlang der Längsachse eines erfindungsgemäßen Dachsteins aus Betonwerkstoff und eines herkömmlichen Dachsteins im Vergleich

Fig. 2 Seitenansicht einer aus einem erfindungsgemäßen und einem herkömmlichen Dachstein gebildeten Dacheindeckung.

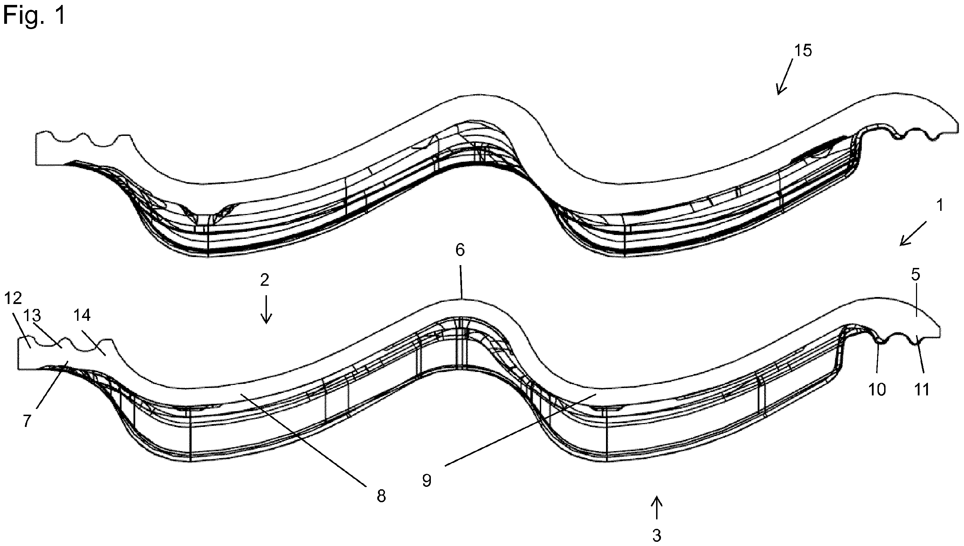

In Fig. 1 sind ein erfindungsgemäßer Dachstein 1 aus Betonwerkstoff und ein herkömmlicher Dachstein 15 jeweils im Querschnitt dargestellt. Der erfindungsgemäße Dachstein 1 weist eine Oberseite 2 sowie eine Unterseite 3 auf. Zudem weist der Dachstein 1 einen Deckfalz 5, eine Mittelkrempe 6 und einen Wasserfalz 7 auf. Zwischen dem Deckfalz 5 und der Mittelkrempe 6 sowie zwischen der Mittelkrempe 6 und dem Wasserfalz 7 ist jeweils ein Wasserlauf 8, 9 angeordnet. Die Wasserläufe 8, 9 dienen bei Regen der kontrollierten Wasserabführung und bilden gleichzeitig die hochbelasteten Bereiche, auf die bei einer Kraftaufbringung auf die Oberseite 2 die stärkste Zugkraft in der unteren Lage ausgeübt wird.

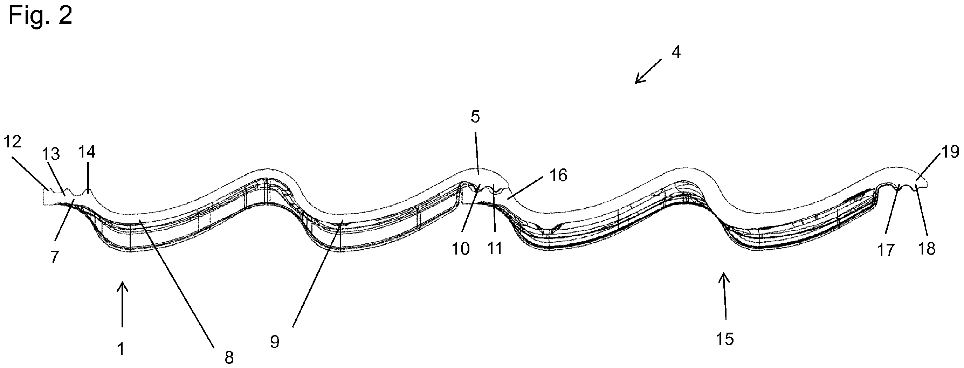

Auf der Unterseite des Deckfalzes 5 sind zwei Deckfalzrippen 10, 11, angeordnet. Diese Deckfalzrippen10, 11 sind derart ausgebildet, dass diese in einen Wasserfalz eines zweiten Dachsteins eingreifen können. Der Wasserfalz 7 des Dachsteins 1 weist mehrere Wasserfalzrippen 12, 13, 14 auf. Diese Wasserfalzrippen 12, 13, 14 sind derart ausgebildet, dass in diese Wasserfalzrippen 12, 13, 14 die Deckfalzrippen eines weiteren Dachsteins angeordnet werden können. Da die Geometrie des Deckfalzes 5 und der Deckfalzrippen 10, 11 sowie die Geometrie des Wasserfalzes 7 und der Wasserfalzrippen 12, 13,14 im Vergleich zu herkömmlichen Dachsteinen 15 unverändert sind, lässt sich der erfindungsgemäßen leichtere Dachsteine 1 aus Betonwerkstoff mit herkömmlichen Dachsteinen 15 kombinieren und zu einer Dacheindeckung verbinden, wie sie in der Fig. 2 dargestellt ist.

Eine solche Dachabdeckung 3 aus einem erfindungsgemäßen Dachstein 1 und einem herkömmlichen Dachstein 15 ist in Fig.2 gezeigt. Dabei sind die Deckfalzrippen 10, 11 des Deckfalzes 5 des erfindungsgemäßen Dachsteins 1 derart ausgebildet, dass diese in einen Wasserfalz 16 eines herkömmlichen Dachsteins eingreifen können. Außerdem wird aus der in Fig. 2 dargestellten Geometrie der Seitenfalze des herkömmlichen und des erfindungsgemäßen Dachsteins deutlich, dass es auch möglich ist, die Deckfalzrippen 17, 18 des Deckfalzes 19 des herkömmlichen Dachsteins 15 in den Wasserfalzrippen 12, 13, 14 des erfindungsgemäßen Dachsteins 1 anzuordnen.

Bei einem Vergleich des herkömmlichen Dachsteins 15 mit dem erfindungsgemäßen Dachstein 1 fällt zudem auf, dass der erfindungsgemäße Dachstein 1 trotz unveränderter Geometrie der Seitenfalze 5, 7 insgesamt eine geringe Produktdicke aufweist. Dabei sind insbesondere die hochbelasten Bereiche des Dachsteins 1, wie insbesondere die Wasserläufe 8,9 dünner ausgebildet als bei herkömmlichen Dachsteinen.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

1    Dachstein
2    Oberseite
3    Unterseite
4    Dacheindeckung
5    Deckfalz
6    Mittelkrempe
7    Wasserfalz
8    Wasserlauf
9    Wasserlauf
10   Deckfalzrippe
11   Deckfalzrippe
12   Wasserfalzrippe
13   Wasserfalzrippe
14   Wasserfalzrippe
15   herkömmlicher Dachstein
16   Wasserfalz
17   Deckfalzrippe
18   Deckfalzrippe
19   Deckfalz

**Patentansprüche**

1.   Dachstein (1) aus einem Betonwerkstoff umfassend ein Bindemittel, eine Gesteinskörnung, einen Leichtgewichtszuschlag aus beschichtetem und/oder hydrobiertem Blähton, hydrophobiertem Bims und/oder Glashohlkugeln und/oder Gemischen daraus und Zugabewasser, der mindestens einen Wasserlauf (8, 9) sowie eine aus Deckfalz (5) und Wasserfalz (7) bestehende Seitenverfalzung aufweist,
     **dadurch gekennzeichnet, dass**
     das Verhältnis von Wasser zu Bindemittel kleiner als 0,3 ist,
     der Leichtgewichtszuschlag aus einem Material besteht, das hydrophob und/oder nicht hygroskopisch ist,
     der Dachstein nach dem Aushärten eine Dichte im Bereich von 1,6 g/cm$^3$ bis 1,9 g/cm$^3$ aufweist,
     wobei der Dachstein in zwischen Deckfalz (5) und Wasserfalz (7) liegenden hochbelasteten Bereichen, vorzugsweise im Bereich des Wasserlaufes, eine Dicke von 5 mm bis 9 mm, vorzugsweise 7 mm bis 8 mm aufweist,
     wobei der Dachstein eine Gesamtporosität über 25% und eine offene Porosität von weniger als 10%, ermittelt gemäß der Messverfahren zur Gesamtporosität und offenen Porosität der Beschreibung, aufweist.

2.   Dachstein (1) nach Anspruch 1, **dadurch gekennzeichnet, dass** der Dachstein 1.300 cm$^3$ bis 1.700 cm$^3$ Betonwerkstoff aufweist, wobei der Dachstein insbesondere ein Format aufweist, mit dem 9 bis 11 Dachsteine/m$^2$ Dachfläche verlegt werden können.

3. Dachstein (1) nach Anspruch 1, **dadurch gekennzeichnet, dass** der Dachstein 1.700 cm$^3$ bis 2.250 cm$^3$ Betonwerkstoff aufweist, wobei der Dachstein insbesondere ein Format aufweist, mit dem 7 bis 9 Dachsteine/m$^2$ Dachfläche verlegt werden können.

4. Dachstein (1) nach Anspruch 1, **dadurch gekennzeichnet, dass** der Dachstein 2.250 cm$^3$ bis 2.750 cm$^3$ Betonwerkstoff aufweist, wobei der Dachstein insbesondere ein Format aufweist, mit dem 5 bis 7 Dachsteine/m$^2$ verlegt werden können.

5. Dachstein (1) nach einem der vorhergehenden Ansprüche, **dadurch gekennzeichnet, dass** der Leichtgewichtszuschlag vor dem Mischen weniger als 5 Gew. % Wasser aufweist.

6. Dachstein (1) nach einem der vorhergehenden Ansprüche, **dadurch gekennzeichnet, dass** das Bindemittel Zement und Microsilica umfasst.

7. Dachstein (1) nach einem der vorhergehenden Ansprüche, **dadurch gekennzeichnet, dass** das Bindemittel eine Mischung ist, wobei die Bestandteile der Mischung ausgewählt sind aus der Gruppe umfassend Portlandzement, Microsilica und Hochleistungsfließmittel.

8. Dachstein (1) nach einem der vorhergehenden Ansprüche, **dadurch gekennzeichnet, dass** der Dachstein nach dem Aushärten eine Dichte von 1,8 g/cm$^3$ aufweist.

9. Dachstein (1) nach einem der vorhergehenden Ansprüche, **dadurch gekennzeichnet, dass** der Betonwerkstoff eine Mischungsfeuchte kleiner oder gleich 11% aufweist.

10. Dachstein (1) nach einem der vorhergehenden Ansprüche, **dadurch gekennzeichnet, dass** der Dachstein ein Flächengewicht von weniger oder gleich 35 kg/m$^2$ aufweist.

11. Dachstein (1) nach einem der vorhergehenden Ansprüche, **dadurch gekennzeichnet, dass** der Dachstein ein Flächengewicht von weniger oder gleich 25 kg/m$^2$ aufweist.

12. Verfahren zur Herstellung von einem Dachstein (1) gemäß einem der vorhergehenden Ansprüche umfassend die folgenden Schritte:

Mischen des Betonwerkstoffs umfassend Bindemittel, eine Gesteinskörnung, einen Leichtgewichtszuschlag aus einer Gruppe umfassend Glashohlkugeln, Blähton, Bims oder Gemische daraus und Zugabewasser;
Formung der Mischung mittels Extrusion;
Teilung des erhaltenen geformten Extrudat zur Ausbildung von Abschnitten und Härtung der Abschnitte,
**dadurch gekennzeichnet, dass**
das Verhältnis von Wasser zu Bindemittel kleiner als 0,3 ist,
der Leichtgewichtszuschlag aus einem Material besteht, das hydrophob und/oder nicht hygroskopisch ist,
der Dachstein nach dem Aushärten eine Dichte im Bereich von 1,6 g/cm$^3$ bis 1,9 g/cm$^3$ und in den hochbelasteten Bereichen, vorzugsweise im Bereich der Wasserläufe, eine Dicke von 5 mm bis 9 mm, vorzugsweise 7 mm bis 8 mm aufweist und
der Dachstein eine Gesamtporosität über 25% und eine offene Porosität von weniger als 10% aufweist.

13. Verfahren zur Herstellung von einem Dachstein nach Anspruch 12, **dadurch gekennzeichnet, dass** der Dachstein 1.300 cm$^3$ bis 1.700 cm$^3$ Betonwerkstoff aufweist, wobei der Dachstein insbesondere ein Format aufweist, mit dem 9 bis 11 Dachsteine/m$^2$ verlegt werden können.

14. Verfahren zur Herstellung von einem Dachstein nach Anspruch 12, **dadurch gekennzeichnet, dass** der Dachstein 1.700 cm$^3$ bis 2.250 cm$^3$ Betonwerkstoff aufweist, wobei der Dachstein insbesondere ein Format aufweist, mit dem 7 bis 9 Dachsteine/m$^2$ verlegt werden können.

15. Verfahren zur Herstellung von einem Dachstein nach Anspruch 12, **dadurch gekennzeichnet, dass** der Dachstein 2.250 cm$^3$ bis 2.750 cm$^3$ Betonwerkstoff aufweist, wobei der Dachstein insbesondere ein Format aufweist, mit dem 5 bis 7 Dachsteine/m$^2$ verlegt werden können.

**Claims**

1. Roofing tile (1) composed of a concrete material comprising a binder, a rock particle fraction, a lightweight aggregate composed of coated and/or hydrophobised expanded clay, hydrophobised pumice and/or hollow glass spheres and/or mixtures thereof and added water, said roofing tile having at least one watercourse (8, 9) and a lateral interlocking joint consisting of a covering fold (5) and a water fold (7),
   **characterised in that**
   the ratio of water to binder is less than 0.3,
   the lightweight aggregate consists of a material which is hydrophobic and/or non-hygroscopic,
   the roofing tile, after curing, has a density in the range from 1.6 g/cm$^3$ to 1.9 g/cm$^3$,
   wherein the roofing tile has a thickness of 5 mm to 9 mm, preferably 7 mm to 8 mm, in highly loaded regions located between the covering fold (5) and the water fold (7),
   wherein the roofing tile has a total porosity above 25% and an open porosity of less than 10%, which are determined according to the measurement method for total porosity and open porosity as indicated in the description.

2. Roofing tile (1) according to claim 1, **characterised in that** the roofing tile has 1300 cm$^3$ to 1700 cm$^3$ of concrete material, wherein the roofing tile has, in particular, a size at which 9 to 11 roofing tiles/m$^2$ of roof area can be laid.

3. Roofing tile (1) according to claim 1, **characterised in that** the roofing tile has 1700 cm$^3$ to 2250 cm$^3$ of concrete material, wherein the roofing tile has, in particular, a size at which 7 to 9 roofing tiles/m$^2$ of roof area can be laid.

4. Roofing tile (1) according to claim 1, **characterised in that** the roofing tile has 2250 cm$^3$ to 2750 cm$^3$ of concrete material, wherein the roofing tile has, in particular, a size at which 5 to 7 roofing tiles/m$^2$ of roof area can be laid.

5. Roofing tile (1) according to any of the preceding claims, **characterised in that** the lightweight aggregate has less than 5% by weight of water before mixing.

6. Roofing tile (1) according to any of the preceding claims, **characterised in that** the binder comprises cement and microsilica.

7. Roofing tile (1) according to any of the preceding claims, **characterised in that** the binder is a mixture, wherein the constituents of the mixture are selected from the group consisting of Portland cement, microsilica and superplasticisers.

8. Roofing tile (1) according to any of the preceding claims, **characterised in that** the roofing tile, after curing, has a density of 1.8 g/cm$^3$.

9. Roofing tile (1) according to any of the preceding claims, **characterised in that** the concrete material has a mixture moisture content of less than or equal to 11%.

10. Roofing tile (1) according to any of the preceding claims, **characterised in that** the roofing tile has a weight per unit area of less than or equal to 35 kg/m$^2$.

11. Roofing tile (1) according to any of the preceding claims, **characterised in that** the roofing tile has a weight per unit area of less than or equal to 25 kg/m$^2$.

12. Method for producing a roofing tile (1) according to any of the preceding claims, said method comprising the following steps:

   mixing the concrete material comprising binder, a rock particle fraction, a lightweight aggregate from the group comprising hollow glass spheres, expanded clay, pumice or mixtures thereof and added water;
   shaping the mixture by means of extrusion;
   parting the shaped extrudate obtained to form sections and curing the sections,
   **characterised in that**
   the ratio of water to binder is less than 0.3,
   the lightweight aggregate consists of a material which is hydrophobic and/or non-hygroscopic,
   the roofing tile, after curing, has a density in the range from 1.6 g/cm$^3$ to 1.9 g/cm$^3$ and has a thickness of 5 mm to 9 mm, preferably 7 mm to 8 mm in the highly loaded regions, preferably in the region of the watercourses and
the roofing tile has a total porosity above 25% and an open porosity of less than 10%.

13. Method for producing a roofing tile according to claim 12, **characterised in that** the roofing tile has 1300 cm$^3$ to 1700 cm$^3$ of concrete material, wherein the roofing tile has, in particular, a size at which 9 to 11 roofing tiles/m$^2$ can be laid.

14. Method for producing a roofing tile according to claim 12, **characterised in that** the roofing tile has 1700 cm$^3$ to 2250 cm$^3$ of concrete material, wherein the roofing tile has, in particular, a size at which 7 to 9 roofing tiles/m$^2$ can be laid.

15. Method for producing a roofing tile according to claim 12, **characterised in that** the roofing tile has 2250 cm$^3$ to 2750 cm$^3$ of concrete material, wherein the roofing tile has, in particular, a size at which 5 to 7 roofing tiles/m$^2$ can be laid.

**Revendications**

1. Tuile (1) en béton comprenant un liant, un granulat, un adjuvant de faible poids, en argile expansée enrobée et/ou hydrofugée, pierre ponce hydrofugée et/ou sphères de verre creuses et/ou mélanges de ceux-ci et eau de gâchage, qui présente au moins une gouttière (8, 9) ainsi qu'un emboîtement latéral consistant en une partie bombée de recouvrement (5) et une rainure d'écoulement d'eau (7),
**caractérisée en ce que**
le rapport entre eau et liant est plus petit que 0,3,
l'adjuvant de faible poids consiste en un matériau qui est hydrophobe et/ou non hygroscopique,
la tuile présente après le durcissement une épaisseur comprise dans la plage de 1,6 g/cm$^3$ à 1,9 g/cm$^3$,
selon laquelle la tuile présente, dans les zones fortement chargées situées entre la partie bombée de recouvrement (5) et la rainure d'écoulement d'eau (7), de préférence dans la zone de la gouttière, une épaisseur de 5 mm à 9 mm, de préférence de 7 mm à 8 mm,
selon laquelle la tuile présente une porosité totale supérieure à 25 % et une porosité ouverte de moins de 10 %, établie conformément aux procédés de mesure pour la porosité totale et la porosité ouverte de la description.

2. Tuile (1) selon la revendication 1, **caractérisée en ce que** la tuile présente 1 300 cm$^3$ à 1 700 cm$^3$ de béton, selon laquelle la tuile présente en particulier un format avec lequel 9 à 11 tuiles/m$^2$ de surface de toit peuvent être posées.

3. Tuile (1) selon la revendication 1, **caractérisée en ce que** la tuile présente 1 700 cm$^3$ à 2 250 cm$^3$ de béton, selon laquelle la tuile présente en particulier un format avec lequel 7 à 9 tuiles/m$^2$ de surface de toit peuvent être posées.

4. Tuile (1) selon la revendication 1, **caractérisée en ce que** la tuile présente 2 250 cm$^3$ à 2 750 cm$^3$ de béton, selon laquelle la tuile présente en particulier un format avec lequel 5 à 7 tuiles/m$^2$ peuvent être posées.

5. Tuile (1) selon l'une des revendications précédentes, **caractérisée en ce que** l'adjuvant de faible poids présente avant le mélange moins de 5 % en poids d'eau.

6. Tuile (1) selon l'une des revendications précédentes, **caractérisée en ce que** le liant comprend du ciment et de la microsilice.

7. Tuile (1) selon l'une des revendications précédentes, **caractérisée en ce que** le liant est un mélange, selon laquelle les composants du mélange sont sélectionnés dans le groupe comprenant du ciment Portland, de la microsilice et un fluidifiant haute performance.

8. Tuile (1) selon l'une des revendications précédentes, **caractérisée en ce que** la tuile présente après le durcissement une épaisseur de 1,8 g/cm$^3$.

9. Tuile (1) selon l'une des revendications précédentes, **caractérisée en ce que** le béton présente une humidité de mélange plus petite ou égale à 11 %.

10. Tuile (1) selon l'une des revendications précédentes, **caractérisée en ce que** la tuile présente un poids surfacique inférieur ou égal à 35 kg/m$^2$.

11. Tuile (1) selon l'une des revendications précédentes, **caractérisée en ce que** la tuile présente un poids surfacique inférieur ou égal à 25 kg/m$^2$.

12. Procédé pour la fabrication d'une tuile (1) selon l'une des revendications précédentes, comprenant les étapes suivantes :

   un mélange du béton comprenant un liant, un granulat, un adjuvant de faible poids provenant d'un groupe comprenant des sphères de verre creuses, de l'argile expansée, de la pierre ponce ou un mélange de ceux-ci et de l'eau de gâchage,
   un façonnage du mélange par extrusion ;
   une division de l'extrudat façonné obtenu pour former des parties et durcir les parties,
   **caractérisé en ce que**
   le rapport entre eau et liant est plus petit que 0,3,
   l'adjuvant de faible poids consiste en un matériau qui est hydrophobe et/ou non hygroscopique,
   la tuile présente après le durcissement une épaisseur comprise dans la plage de 1,6 g/cm$^3$ à 1,9 g/cm$^3$ et, dans les zones fortement chargées, de préférence dans la zone des gouttières, une épaisseur de 5 mm à 9 mm, de préférence de 7 mm à 8 mm, et
   la tuile présente une porosité totale supérieure à 25 % et une porosité ouverte de moins de 10 %.

13. Procédé pour la fabrication d'une tuile selon la revendication 12, **caractérisé en ce que** la tuile présente 1 300 cm$^3$ à 1 700 cm$^3$ de béton, selon lequel la tuile présente en particulier un format avec lequel 9 à 11 tuiles/m$^2$ peuvent être posées.

14. Procédé pour la fabrication d'une tuile selon la revendication 12, **caractérisé en ce que** la tuile présente 1 700 cm$^3$ à 2 250 cm$^3$ de béton, selon lequel la tuile présente en particulier un format avec lequel 7 à 9 tuiles/m$^2$ peuvent être posées.

15. Procédé pour la fabrication d'une tuile selon la revendication 12, **caractérisé en ce que** la tuile présente 2 250 cm$^3$ à 2 750 cm$^3$ de béton, selon lequel la tuile présente en particulier un format avec lequel 5 à 7 tuiles/m$^2$ peuvent être posées.

Fig. 1

Fig. 2

EP 3 261 811 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3522846 A1
- AT E52214 B1
- DE 38865252 T2

- WO 9424062 A1
- US 5106557 A
- GB 2266904 A